# EUROPÄISCHE PATENTSCHRIFT

(11) **EP 1 205 325 B1**
(45) Veröffentlichungstag und Bekanntmachung des Hinweises auf die Patenterteilung: **28.05.2008**
(21) Anmeldenummer: 01125513.0
(22) Anmeldetag: 25.10.2001
(51) Int. Cl.: B60J 7/06

(54) **Faltverdeckanordnung für Fahrzeugaufbauten**
Tarpaulin arrangement for vehicle bodies
Arrangement de bâche de carosseries de véhicules

(30) Priorität: 11.11.2000 DE 10056050
(43) Veröffentlichungstag der Anmeldung: 15.05.2002
(73) Patentinhaber: Trailer System Engineering GmbH & Co. KG, 72365 Ratshausen (DE)
(72) Erfinder: Eberle, Reinhard, 89077 Ulm (DE)
(74) Vertreter: Weber, Gerhard

(56) Entgegenhaltungen:
- EP-A- 0 069 391
- EP-A- 0 523 400
- EP-A- 0 551 159
- WO-A-97/32745
- US-A- 3 820 840

## Beschreibung

Die Erfindung betrifft eine Faltverdeckanordnung, insbesondere für Planenverdecke von Fahrzeugaufbauten.

Bei derartigen Faltverdeckanordnungen sind in parallelen, seitlich beabstandeten Längsführungen Laufwagen auf Rollen verschiebbar gelagert. Die Laufwagen sind zwischen den beiden Längsträgern paarweise durch den überdeckten Frachtraum überspannende und die Verdeckplane stützende Querträger verbunden. Innerhalb eines Längsträgers aufeinanderfolgende Laufwagen sind durch ein Paar von Bügeln gekoppelt, welche auf dem Laufwagen um horizontale Schwenkachsen schwenkbar gelagert und in einem Bügelgelenk gelenkig miteinander verbunden sind. Die Bügel sind zwischen einer Streckstellung bei maximal voneinander entfernten Laufwagen und einer Aufrechtstellung bei minimalem Laufwagenabstand im Betrieb schwenkbar.

Aus der DE 92 00 417 U1 ist eine derartige Verdeckanordnung bekannt, bei welcher stabförmige Stützstreben als Koppelbügel einseitig an einer Seitenwange der Laufwagen angelenkt sind. Die Anlenkachsen der Stützstreben sind an der Seitenwange weit nach unten insbesondere unterhalb der Achsen von Führungsrollen der Laufwagen verlagert und die in oder bei den Bügelgelenken vorhandenen Querspriegel liegen in der Streckstellung der Stützstreben auf der Oberseite des Längsträgers auf. Durch die tiefe Anlenkung der Stützstreben bleiben diese in der Streckstellung in einer die Aufstellung erleichternden deutlichen Anwinkelung. Eine vergleichbare Schiebeverdeckanordnung zeigt die EP 0 778 169 B1.

Bei einer aus der DE 90 12 980 U1 bekannten Faltverdeckanordnung sind die Stützstreben an nach oben weisenden Flanschen der Laufwagen angelenkt.

Aus einem Firmenprospekt der Firma AL-KO Kober ist unter der Bezeichnung MAGNUM eine Verdeckanordnung beschrieben, bei welcher auf die ebene Deckfläche der abgewinkelten Trägerplatte eines Laufwagens seitlich beabstandet Lagerplatten aufgenietet sind, welche die Enden eines aus einem gebogenen Draht geformten Bügels schwenkbar halten.

Die WO 97/32745 A1 zeigt eine Faltverdeckanordnung, bei welcher Bügel mit gelenkig verbundenen freien Enden auf Deckschenkeln von Trägerplatten von Laufwagen aufliegen und auf diesen befestigt sind. In der EP 0069391 A1, der US 3820840 A, der EP 0523400 A2 und der EP 0551159 A1 sind Faltverdeckanordnungen beschrieben, bei welchen die Bügel seitlich von den Längsführungen gelagert sind.

Der vorliegenden Erfindung liegt die Aufgabe zugrunde, eine Faltverdeckanordnung der einleitend beschriebenen Art anzugeben, die sich durch besonders vorteilhafte Lagerung der Bügel an den Laufwagen auszeichnet.

Die erfindungsgemäße Lösung ist im unabhängigen Patentanspruch beschrieben. Die abhängigen Ansprüche enthalten vorteilhafte Ausgestaltungen und Weiterbildungen der Erfindung.

Eine besonders einfache aufzubauende und damit kostengünstige Lagerung der Bügel an den Laufwagen, ergibt sich dadurch, daß die Bügel in einer Montageschwenkstellung, welche außerhalb des im Betrieb auftretenden Schwenkbereichs der Bügel liegt, in die Lager einsetzbar sind und nach Verschwenkung in den im Betrieb auftretenden Schwenkbereich gegen Ausrücken aus dem Schwenklager gesichert sind. Zur Demontage wird der Bügel aus dem Betriebs-Schwenkbereich in die Montageschwenkstellung geschwenkt, wo er aus dem Lager entnehmbar ist. Nachfolgend sind der Einfachheit halber die Erläuterngen auf den Montagevorgang beim Einsetzen des Bügels in das Schwenklager beschränkt.

Die Montageschwenkstellung und der im Betrieb der Faltverdeckanordnung auftretende Schwenkbereich des Bügels ist jeweils auf die Stellung des Bügels relativ zum Laufwagen bezogen. Der Betriebs-Schwenkbereich ist begrenzt durch die Streckstellung der zwischen zwei Laufwagen untereinander gelenkig verbundenen Bügel bei maximalem Laufwagenabstand einerseits und der Aufrechtstellung bei minimalem Laufwagenabstand andererseits. Die Ausrichtung der Laufwagen im Betrieb der Anordnung ist durch die Längsführungen vorgegeben.

Die Montageschwenkstellung ist vorzugsweise durch eine aus dem Schwenkbereich über die Aufrechtstellung hinaus verschwenkte Position gegeben. Diese kann z. B. bei offenem Bügelgelenk eingenommen werden. Ist eine Öffnung des Bügelgelenks bei in den Längsträgern geführten Laufwagen nicht vorgesehen, so sind die Bügel vorzugsweise vor Einführen der Laufwagen in die Führungen der Längsträger in die Schwenklager einzusetzen.

Das Einsetzen der Bügel in die Schwenklager kann vorteilhafterweise ohne Werkzeug erfolgen. Durch die Einsetzbarkeit in der Montageschwenkstellung und die Sicherung innerhalb des Betriebs-Schwenkbereichs, der im folgenden auch einfach nur als Schwenkbereich bezeichnet ist, können die Laufwagen bzw. Module mit paarweise über Querträger verbundenen Laufwagen als fertige Einheiten vorbereitet sein, welche in der jeweils benötigten, von der Länge der Längsträger abhängigen Anzahl über die Bügel gekoppelt werden können, ohne daß weitere Bauteile für den Zusammenbau benötigt werden. Die die Sicherung der in die Schwenklager eingesetzten Bügel bewirkenden Elemente können dabei vorteilhafterweise auch einstückig mit den Trägerplatten der Laufwagen und/oder mit den Bügeln ausgeformt sein.

Besonders günstig ist eine Ausführungsform, bei welcher beim Einsetzen des Bügels eine Verschiebung des lagerseitigen Endes in Richtung der Schwenkachse erfolgt und innerhalb des Schwenkbereichs eine Verschiebung in Gegenrichtung soweit begrenzt ist, daß ein Ausrücken des Bügels aus dem Lager verhindert ist. Hierzu sind vorzugsweise auf dem Laufwagen Anschlagmittel vorhanden, welche eine solche Begrenzung der Verschiebung bewirken. Diese wirken vorteilhafterweise auf einen lagernahen Bügelabschnitt zwischen Schwenklager und Bügelgelenk.

Das Einsetzen des Bügels in das Schwenklager durch Verschieben des Bügelendes in Richtung der Schwenkachse ermöglicht einen besonders einfachen Lageraufbau mit einem gebogenen Draht kreisrunden Querschnitts als Bügel, dessen beide Drahtenden in fluchtender Ausrichtung umgebogen sind und ohne besondere zusätzliche Formgebung als Lagerzapfen in Lagerbohrungen, Buchsen, Schalen etc. auf Laufwagenseite eingesteckt werden.

An die Präzision der Schwenklager sind keine hohen Anforderungen gestellt, so daß auch die laufwagenseitigen Lagerbohrungen kostengünstig herstellbar sind. Besonders vorteilhaft ist eine Ausführung, bei welcher in einer ebenen Platte in Laschen Durchbrüche als Lageröffnungen gebildet und die Laschen senkrecht aus der Plattenebene nach unten umgebogen werden. Durch Strukturierung der Plattenebene gegenüber diesen Lagerlaschen können auf einfache Weise sowohl Aussparungen zum Einsetzen der Bügel in der Montageschwenkstellung als auch Anschlagmittel zur Sicherung der eingesetzten Bügel innerhalb des Schwenkbereichs in der Platte realisiert werden.

Die Bügel sind zum Einsetzen vorteilhafterweise im Bereich des Schwenklagers in der Breite entgegen einer Rückstellkraft veränderbar, vorzugsweise durch elastische Verformung der Bügel. Insbesondere bei der bereits erwähnten vorteilhaften Ausführung der Bügel als gebogener Draht kann der Drahtbügel lagerseitig beim Einsetzen in die Schwenklager durch elastische Verformung in der Breite veränderlich sein. Vorteilhafterweise sind die Drahtenden durch die Ausgangsform des Bügels oder auch unter leichter Vorspannung nach dem Einsetzen in die laufwagenseitigen Lager dort auch in der Montageschwenkstellung gehalten, wodurch die Handhabung beim Zusammenfügen von Bügel und Laufwagen vereinfacht wird.

Die Verwendung von abgewinkelten Trägerplatten für die Laufwagen, auf welchem dann Rollen befestigt und Schwenklager ausgebildet werden, ist z. B. aus der eingangs bereits genannten Firmenschrift von autocar an sich bekannt. Die Trägerplatte kann sich dabei zur Mitte des Planenverdecks hin günstigerweise in einem Stutzen zur Befestigung eines Querträgers fortsetzen.

Besonders vorteilhaft ist bei einer solchen Anordnung, die Schwenklager für die Bügel in dem horizontalen Deckschenkel und gegen dessen obere Ebene abgesenkt auszubilden. Vorzugsweise sind in dem Deckschenkel auch noch gegen die obere Ebene abgesenkt Aufnahmen ausgebildet, in welchen die Bügel in deren Streckstellung einliegen. Insbesondere können diese Bügelaufnahmen eine Begrenzung der Bügelbewegung in die Streckstellung bilden und eine geringe verbleibende Anwinkelung der im Bügelgelenk verbundenen Bügel bewirken. Die im Deckschenkel angeordneten und abgesenkten Schwenklager und die ggf. gleichfalls abgesenkten Bügelaufnahmen ermöglichen eine besonders geringe Bauhöhe der Laufwagen mit den Bügeln.

Die Bügel sind vorteilhafterweise jeweils zweifach seitlich beabstandet gelagert. Die seitlich beabstandeten Teillager eines Bügels können dabei vorteilhafterweise einen Teil des Längsträgers, insbesondere eines nach oben offenen Laufkanals für Führungsrollen, zwischen sich einschließen. Hierdurch kann die Trägerplatte des Laufwagens günstigerweise mit der unteren Ebene des im wesentlichen ebenen Deckschenkels in geringem vertikalem Abstand von der Oberseite des Längsträgers geführt werden.

Durch die Anordnung der Schwenklager und ggf. der Bügelaufnahmen im Deckschenkel und seitlich von der Abbiegung zum Außenschenkel sowie zum Verbindungsstutzen für den Querträger beabstandet, bleiben zum einen der planenschonend gerundete Übergang zum Außenschenkel und die Gestaltungsfreiheit für den Verbindungsstutzen erhalten. Zum anderen ergeben sich sowohl für die Schwenklager als auch für die Bügelaufnahmen besondere Vorteile, insbesondere für eine stabile seitliche Festlegung der Bügel und, wie bereits beschrieben, deren Sicherung im Schwenklager.

Vorteilhafterweise sind die Schwenklager zur Erzielung einer geringen Bauhöhe der Laufwagenanordnung nur gering abgesenkt, wobei vorzugsweise der Abstand der Schwenklager, insbesondere der in laufwagenseitige Lagerbohrungen eingesetzten Lagerzapfen der Bügel, von der unteren Ebene des Deckschenkels klein ist gegenüber dem Lagerdurchmesser, und wobei im Extremfall die Lagerzapfen auch an der unteren Ebene des Deckschenkels anliegen können. Der vertikale Abstand der Trägerplatte zur Oberkante des Längsträgers, kann vorteilhafterweise so gering gewählt sein, daß auch bei dicht an der unteren Ebene des Deckschenkels liegenden Schwenklagern, die Schwenkachsen noch unterhalb der Oberkante des Längsträgers liegen können.

Die laufwagenseitigen Schwenklager sind vorteilhafterweise einstückig mit der Trägerplatte ausgeführt, insbesondere in Form der bereits beschriebenen, aus der Ebene des Deckschenkels umgebogenen Lagerlaschen. Vorzugsweise sind auch die Bügelaufnahmen durch Verformung eines ebenen Plattenabschnitts als Vertiefungen gegen den ansonsten im wesentlichen ebenen Deckschenkel ausgeführt.

Mit Ausnahme der endständigen Laufwagen sind auf den Laufwagen jeweils zwei in Längsrichtung entgegengesetzte Bügel gelagert. Die Schwenklager der beiden Bügel liegen vorteilhaft in Längsrichtung eng beieinander nahe der Mitte des Laufwagens. Insbesondere ist der Lagerabstand klein gegenüber der Erstrekkung des Laufwagens bzw. dessen Deckschenkel in Längsrichtung, so daß eine stabile und zuverlässige reproduzierbare Ausrichtung der Bügel in Streckstellung durch die begrenzenden Bügelaufnahmen gewährleistet ist. Die Bügelaufnahmen sind vorzugsweise von den Schwenklagern wegweisend leicht nach oben geneigt, so daß bei geraden Seitenarmen eines Drahtbügels eine geringe Voranwinkelung der gestreckten Bügel zum Aufrichten vorliegt.

Die Erfindung ist nachfolgend anhand bevorzugter Ausführungsbeispiele noch eingehend veranschaulicht. Dabei zeigt
- Fig. 1: eine Seitenansicht eines Laufwagenpaars mit maximal gestreckten Bügeln
- Fig. 2: eine Draufsicht auf Fig. 1
- Fig. 3: ein Laufwagenpaar mit Bügeln in Aufrechtstellung
- Fig. 4: einen Bügel
- Fig. 5: eine Trägerplatte eines Laufwagens von unten
- Fig. 6: einen Schnitt entlang A-A von Fig. 5
- Fig. 7: einen Schnitt entlang B-B von Fig. 5
- Fig. 8: Fig. 7 mit mehreren Bügelschwenkpositionen
- Fig. 9: einen Laufwagen in einem Längsträger

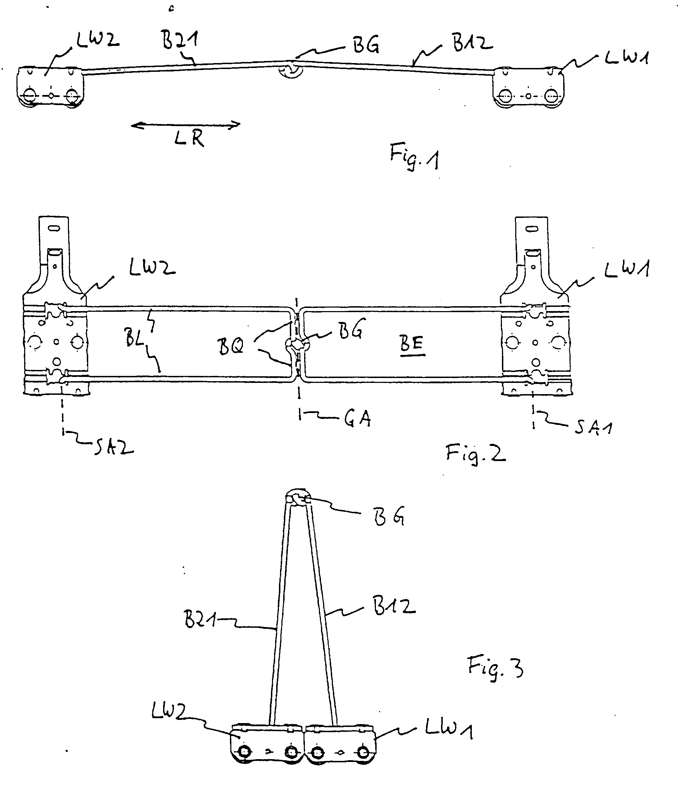

In Fig. 1 sind in Seitenansicht, in Fig. 2 in Draufsicht zwei Laufwagen LW1, LW2 skizziert, welche durch Bügel B12, B21 gekoppelt sind, wobei sich die Bügel in Streckstellung befinden und der Abstand der Laufwagen in Längsrichtung LR maximal ist. Die Bügel sind in Schwenklagern der Laufwagen um horizontale Schwenkachsen SA1 bzw. SA2 schwenkbar gelagert und den Laufwagen abgewandt in einem Bügelgelenk BG miteinander verbunden und um eine durch das Bügelgelenk gehende horizontale, zu den Schwenkachsen parallele Gelenkachse GA relativ zueinander schwenkbar. Die von den Bügeln aufgespannten Flächen BE liegen in der in Fig. 1 und Fig. 2 skizzierten Streckstellung fast horizontal, wobei eine geringe verbleibende Anwinkelung der Bügel zur erleichterten Aufrichtung vorgesehen ist.

Unter einer in Längsrichtung die Laufwagen aufeinander zu bewegenden Kraft richten sich die Bügel auf und erreichen bei minimalem Laufwagenabstand ihre Aufrechtstellung wie in Fig. 3 skizziert. Die Anordnungen nach Fig. 1 bis 3 sind in Längsrichtung LR mit weiteren Bügelpaaren und Laufwagen fortgesetzt.

Die Laufwagen sind dabei in an sich gebräuchlicher Weise über je zwei Rollenpaare in zwei Längsführungen eines Längsträgers geführt. Die im Gelenk BG verbundenen Bügel können Schwenkpositionen bezüglich der geführten Laufwagen nur zwischen der in Fig. 1 skizzierten Streckstellung und der in Fig. 3 skizzierten Aufrechtstellung einnehmen.

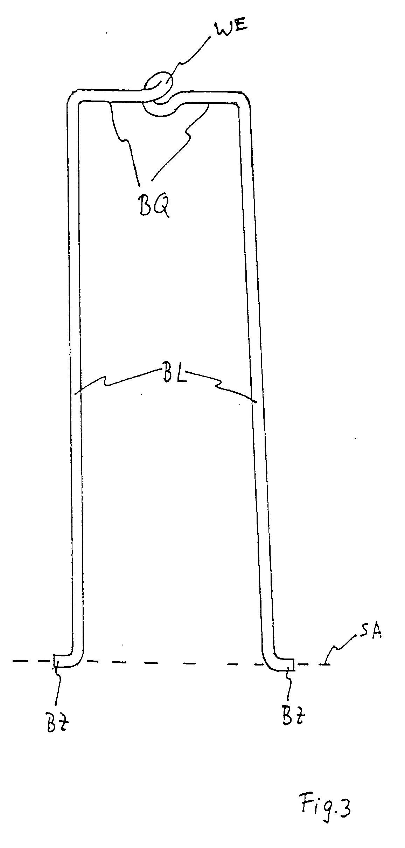

In Fig. 4 ist eine bevorzugte Ausführungsform eines Bügels skizziert, der aus einem durchgehenden Drahtabschnitt geformt ist und zwischen zwei als Lagerzapfen BZ dienenden Drahtenden zwei Längsarme BL, einen diese im Bereich des Bügelgelenks BG verbindenden Querarm BQ und innerhalb des Querarms eine wendelförmige Gelenköse WE aufweist. Die Drahtenden BZ sind annähernd fluchtend entgegengesetzt ausgerichtet und liegen im in den Laufwagen eingesetzten Zustand des Bügels in Richtung der Schwenkachse SA des Schwenklagers. Die Längsarme BL des Bügels können vom Querarm in Richtung der Drahtenden im entspannten Zustand leicht divergierend verlaufen und im eingesetzten Zustand bei parallelen Längsarmen unter leichter achsialer Vorspannung an den Lageröffnungen der laufwagenseitigen Schwenklager anliegen. Der Drahtquerschnitt ist vorzugsweise durchgehend kreisförmig. Die Bügelbreite kann durch Zusammendrücken der schwenklagerseitigen Bügelenden unter elastischer Verformung der Bügel verringert werden, um die Drahtenden als Lagerzapfen in Lageröffnungen einer vorteilhaften Ausführung der Schwenklager einzusetzen.

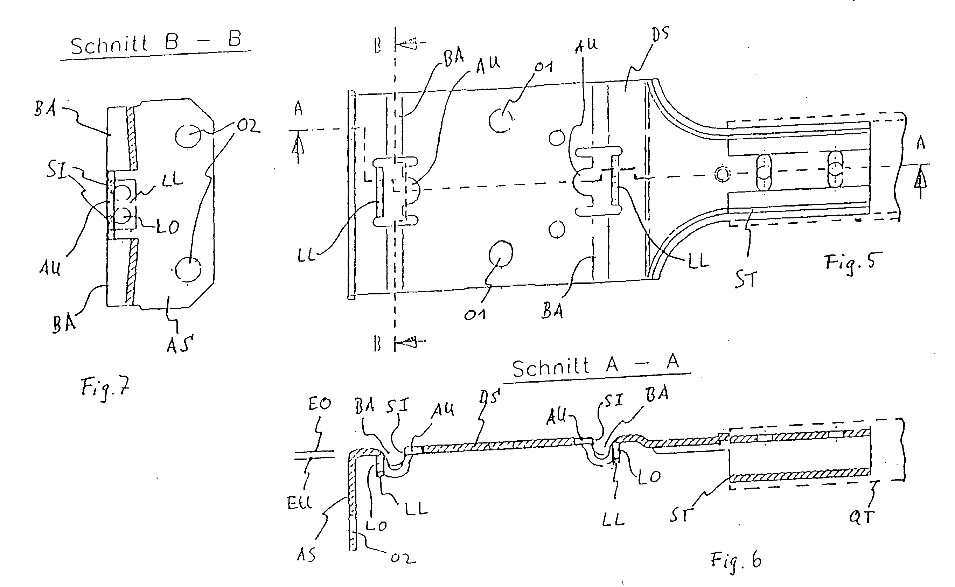

In Fig. 5 ist eine bevorzugte Ausführung einer Trägerplatte in Ansicht von unten skizziert. Die Trägerplatte besteht in an sich gebräuchlicher Weise aus einem in der Zeichnungsebene liegenden horizontalen Deckschenkel DS, an welchen sich bezüglich des vom Verdeck überspannten Frachtraum außen liegend ein vertikaler, aus der Zeichenebene heraus gerichteter Außenschenkel AS anschließt und der nach innen, d. h. zur Mitte des Frachtraums hin in einen Anschlußstutzen ST übergeht, der zum Anschluß eines den Frachtraum überspannenden Querträgers QT vorgesehen ist. Eine gestuft in Längsrichtung LR verlaufende Schnittebene B-B und eine quer dazu gestufte Schnittebene A-A ergeben die Skizzen nach Fig. 7 bzw. Fig. 6.

Der Deckschenkel DS bildet eine weitgehend ebene einstückige Platte, mit einer oberen und einer unteren Deckschenkelebene EO bzw. EU, in welcher verschiedene Strukturen ausgebildet sind. Insbesondere sind in wiederum gebräuchlicher Weise zwei in Längsrichtung beabstandete Öffnungen O1 in der Plattenfläche vorgesehen, in welchen Rollenanordnungen befestigt werden.

Wesentlich für die weitere Erläuterung der vorliegenden Erfindung sind Lagerlaschen LL, Bügelaufnahmen BA, Montageaussparungen AU und Sicherungskanten SI. Die Montageaussparungen AU und die Sicherungskanten SI sind Strukturen in der ebenen Plattenfläche.

Die Lagerlaschen LL sind aus der ebenen Plattenfläche nach unten umgebogen. Die Struktur der Lagerlaschen wird vorzugsweise vor dem Umbiegen in der ebenen Plattenfläche erzeugt und die strukturierten Laschen werden, vorzugsweise gemeinsam mit anderen Umformungen, senkrecht zur Plattenfläche nach unten umgebogen. Die Lagerlaschen LL weisen insbesondere zwei in Längsrichtung LR eng benachbarte Lageröffnungen LO auf, in welche die Drahtenden BZ zweier Bügel als Lagerzapfen eingesetzt werden.

Den Lagerlaschen stehen die Sicherungskanten SI in einem relativ geringen Abstand gegenüber, der aber mindestens gleich dem Durchmesser des Bügeldrahts, vorzugsweise geringfügig größer als dieser ist. Die Sicherungskanten ermöglichen eine Verschwenkung des Bügels innerhalb des Schwenkbereichs, begrenzen aber die achsiale Verschiebung auf ein Maß, welches ein Ausrücken der Lagerzapfen aus den Lageröffnungen LO verhindert. Die Aussparungen AU weichen von den Lagerlaschen LL horizontal weiter zurück und erlauben in der Montageschwenkstellung eines Bügels durch Verschiebung des Bügelendes in Richtung der Schwenkachse das Ausrücken des Lagerzapfens aus der Lageröffnung.

Aus der Platte des Deckschenkels nach unten umgeformt sind Bügelaufnahmen BA, welche insbesondere die Form von Rinnen aufweisen können und von der Plattenmitte aus zum Plattenrand hin leicht ansteigen. Die Bügelaufnahmen sind vorzugsweise so geformt, daß sie für die Bügel eine Begrenzung der Schwenkung in Streckstellung derart bilden, daß gerade Bügellängsarme von den Schwenklagern aus in Richtung des Bügelgelenks leicht ansteigen. Die Bügelaufnahmen sind so tief, daß die Bügel in Streckstellung zumindest überwiegend unter der Ebene EO zu liegen kommen. Da die Bügelaufnahmen quer zur Längsrichtung mehrere Plattenabschnitte verbinden, ist für eine hohe Plattenstabilität eine große Erstreckung der Bügelaufnahmen in Längsrichtung vorteilhaft.

Andererseits ist im Interesse einer geringen Bauhöhe der Laufwagenanordnung von Vorteil, wenn die vertikale Erstreckung von Lagerlaschen und Bügelaufnahmen BA unter die Ebene EU gering bleibt. Die tiefsten Punkte der Lagerlaschen und der Ausbuchtungen für die Bügelaufnahmen sind vorteilhafterweise annähernd gleich von der unteren Ebene EU beabstandet.

Die Lageröffnungen LO der Lagerlaschen reichen vorteilhafterweise bis zu der unteren Ebene EU, so daß die in die Lageröffnungen eingesetzten Lagerzapfen der Bügel nur sehr gering gegen die untere Ebene beabstandet sind, vorzugsweise um ein Maß, welches klein ist gegen den Durchmesser der Lagerzapfen.

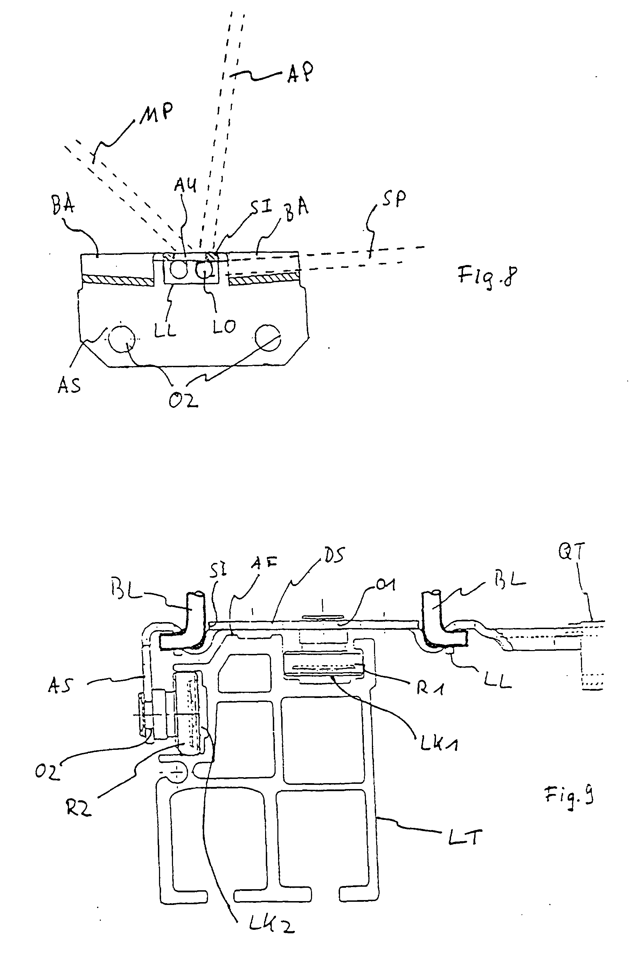

Die Fig. 8 veranschaulicht anhand von mit unterbrochenen Linien skizzierten verschiedenen Schwenkpositionen eines Bügels um die Schwenklagerachse wesentliche vorteilhafte Eigenschaften der erfindungsgemäßen Anordnung. In der Bügelposition SP bei vollständig gestreckten Bügeln (Fig. 1, Fig. 2) liegt der Bügel mit seinen Längsarmen in den Bügelaufnahmen BA der Laufwagen-Trägerplatte und stützt sich im Lager und der Bügelaufnahme ab, wobei die Abstützung eine geringe Steigung der Längsarme zum Bügelgelenk hin aufrechterhält. Eine Verschiebung der schwenklagernahen Bügelabschnitte parallel zur Schwenkachse (senkrecht zur Zeichenebene) und damit ein Ausrücken des Lagerzapfens des Bügels aus der Lageröffnung LO der Lagerlasche LL ist durch die Seitenwand der Bügelaufnahme verhindert. In der Aufrechtstellung AP des Bügels, welche mit der Streckstellung SP den im Betrieb möglichen Schwenkbereich SB des Bügels begrenzt, ist eine Verschiebung des Bügels parallel zur Schwenkachse durch die Sicherungskante SI so begrenzt, daß ein Ausrücken des Lagerzapfens aus der Lageröffnung nicht möglich ist. Innerhalb des gesamten Schwenkbereichs SB ist eine derartige Verschiebung durch die Sicherungskante SI oder die Bügelaufnahme begrenzt.

Bei einer Verschwenkung des Bügels aus dem Schwenkbereich SB über die Aufrechtstellung AP hinaus in eine Montagestellung MP, die nur bei gelöstem Bügelgelenk und/oder nicht in den Längsträgern geführten Laufwagen, nicht aber im Betrieb erreichbar ist, kann der Bügel parallel zur Schwenkachse so weit in die Aussparung AU hinein verschoben werden, daß der Lagerzapfen achsial vollständig aus der Lageröffnung ausrückt und der Bügel in Richtung der Längsarme entnommen werden kann.

Die Sicherung der Bügelzapfen in den Schwenklagern in aufrechter Bügelstellung durch die Sicherungskanten SI ist auch aus Fig. 9 anschaulich ersichtlich, wo ein in einem Längsträger LT geführter Laufwagen mit Blick in Längsrichtung skizziert ist. die Führung des Laufwagens erfolgt in an sich üblicher Weise mittels zweier Rollenanordnungen R1, R2 mit je zwei in Längsrichtung beabstandeten Rollen, welche in den Öffnungen O1 des Deckschenkels DS bzw. Öffnungen O2 des Außenschenkels befestigt sind. Die Rollen laufen in Führungskanälen LK1 bzw. LK2 des Längsträgers LT. Der geringe vertikale Platzbedarf der Lagerlaschen, Bügelenden und Bügelaufnahmen unter der unteren Ebene des flachen Deckschenkelabschnitts ermöglicht vorteilhafterweise eine besonders geringe Bauhöhe der Anordnung und eine tiefe Positionierung des Deckschenkels mit besonders geringem Abstand der Oberkante AF des Längsträgers von der unteren Ebene EU des Deckschenkels.

Die vorstehend und in den Ansprüchen genannten sowie die den Abbildungen entnehmbaren Merkmale sind sowohl einzeln auch in verschiedenen Kombinationen vorteilhaft realisierbar. Die Erfindung ist nicht auf die beschriebenen Ausführungsbeispiele beschränkt, sondern durch den Schutzumfang der Ansprüche definiert.

## Patentansprüche

1. Faltverdeckanordnung, insbesondere für Planenverdecke von Fahrzeugaufbauten, mit in seitlich beabstandeten Längsführungen verschiebbaren Laufwagen (LW1, LW2) und je einem Paar von Bügeln (B21, B12) zwischen aufeinanderfolgenden Laufwagen, wobei die Bügel in Schwenklagern (LO) der Laufwagen (LW1, LW2) gelagert sind und die Laufwagen eine Trägerplatte mit einem im wesentlichen ebenen, den Längsträger (LT) horizontal überdeckenden Deckschenkel (DS) enthalten, **dadurch gekennzeichnet, daß** die Schwenklager (LO) in den Deckschenkeln (DS) gegen die obere Deckschenkelebene (EO) abgesenkt angeordnet sind.

2. Anordnung nach Anspruch 1, **dadurch gekennzeichnet, daß** gegen die obere Deckschenkelebene (EO) abgesenkte Bügelaufnahmen (BA) vorgesehen sind, in welchen die Bügel (B21,B12) in einer Streckstellung einliegen.

3. Anordnung nach Anspruch 2, **dadurch gekennzeichnet, daß** die Bügelaufnahmen (BA) Begrenzungsanschläge für die Streckstellung der Bügel (B21,B12) bilden.

4. Anordnung nach Anspruch 2 oder 3, **dadurch gekennzeichnet, daß** die Bügelaufnahmen (BA) einstückig mit der Trägerplatte ausgebildet sind.

5. Anordnung nach Anspruch 4, **dadurch gekennzeichnet, daß** die Bügelaufnahmen (BA) durch Verformung eines ebenen Plattenabschnitts hergestellt sind.

6. Anordnung nach einem der Ansprüche 1 bis 5, **dadurch gekennzeichnet, daß** von dem Deckschenkel (DS) Lagerlaschen (LL) nach unten umgebogen sind.

7. Anordnung nach einem der Ansprüche 1 bis 6, **dadurch gekennzeichnet, daß** der Abstand des Schwenklagers (LO) von der unteren Deckschenkelebene (EU) klein ist gegenüber dem Lagerdurchmesser.

8. Anordnung nach einem der Ansprüche 1 bis 7, **dadurch gekennzeichnet, daß** der Bügel (B21;B12) in zwei seitlich beabstandeten Teillagern des Laufwagens (LW1,LW2) gelagert ist und die Teillager einen Teil des Längsträgers (LT) zwischen sich einschließen.

9. Anordnung, nach einem der Ansprüche 1 bis 8, **dadurch gekennzeichnet, dass** im Betrieb der Faltverdeckanordnung die Bügel (B21,B12) über einen begrenzten Schwenkbereich zwischen einer Aufrechtstellung und einer Streckstellung schwenkbar in den Schwenklagern (LO) der Laufwagen (LW1,LW2) gelagert und den Laufwagen (LW1,LW2) abgewandt in einem Bügelgelenk (BG) miteinander verbunden sind und daß die Bügel (B21,B12) in einer außerhalb des genannten Schwenkbereichs liegenden Montageschwenkstellung in die Schwenklager (LO) einsetzbar bzw. aus diesen entnehmbar und in Schwenkstellungen innerhalb des genannten begrenzten Schwenkbereichs gegen Ausrücken aus den Schwenklagern (LO) gesichert sind.

10. Anordnung nach Anspruch 9, **dadurch gekennzeichnet, daß** die Bügel (B21, B12) in der Montageschwenkstellung durch Verschiebung der lagerseitigen Bügelenden (BZ) parallel zur Schwenkachse (SA) in die Schwenklager (LO) einsetzbar bzw. aus diesen entnehmbar sind und daß an dem Laufwagen (LW1;LW2) Anschlagmittel (SI) vorhanden sind, welche innerhalb des Schwenkbereichs eine Verschiebung der Bügelenden (BZ) parallel zur Schwenkachse (SA) soweit begrenzen, daß ein Ausrücken der Bügel aus den Schwenklagern (LO) verhindert ist.

11. Anordnung nach Anspruch 10, **dadurch gekennzeichnet, daß** die Anschlagmittel (SI) auf einen lagernahen Abschnitt des Bügels (B21,B12) zwischen Schwenklager (LO) und Bügelgelenk (BG) wirken.

12. Anordnung nach einem der Ansprüche 9 bis 11, **dadurch gekennzeichnet, daß** die lagerseitige Breite der Bügel (B21,B12) zur Montage entgegen einer Rückstellkraft veränderlich ist.

13. Anordnung nach Anspruch 12, **dadurch gekennzeichnet, daß** die Veränderung der lagerseitigen Bügelbreite durch elastische Verformung der Bügel (B21,B12) möglich ist.

14. Anordnung nach einem der Ansprüche 9 bis 13, **dadurch gekennzeichnet, daß** die Bügel (B21, B12) durch Teile (SI) der Trägerplatte gegen Ausrücken aus dem Schwenklager (LO) gesichert sind.

15. Anordnung nach einem der vorhergehenden Ansprüche, **dadurch gekennzeichnet, daß** die Bügel (B21, B12) jeweils aus einem Drahtstück geformt und die beiden Bügelenden (BZ) als Lagerzapfen fluchtend ausgerichtet umgebogen sind.

16. Anordnung nach einem der Ansprüche 1 bis 15, **dadurch gekennzeichnet, daß** der Abstand der Schwenklager zweier auf einem Laufwagen (LW1; LW2) gelagerter Bügel (B21, B12) in Längsrichtung (LR) klein ist gegenüber der Erstreckung der Trägerplatte des Laufwagens (LW1; LW2) in Längsrichtung (LR).

## Claims

1. Tarpaulin arrangement, in particular for tarpaulins of vehicle bodies, with running carriages (LW1, LW2) which are displaceable in laterally spaced-apart longitudinal guides and with a respective pair of bows (B21, B12) between consecutive running carriages, wherein the bows are mounted in pivot bearings (LO) of the running carriages (LW1, LW2), and the running carriages contain a support plate with an essentially planar top limb (DS) which covers the longitudinal member (LT) horizontally, **characterized in that** the pivot bearings (LO) are arranged in the top limbs (DS) in a recessed manner in relation to the upper top limb plane (EO).

2. Arrangement according to Claim 1, **characterized in that** bow mounts (BA) which are recessed in relation to the upper top limb plane (EO) and in which the bows (B21, B12) lie in a stretched-out position are provided.

3. Arrangement according to Claim 2, **characterized in that** the bow mounts (BA) form boundary stops for the stretched-out position of the bows (B21, B12).

4. Arrangement according to Claim 2 or 3, **characterized in that** the bow mounts (BA) are formed integrally with the support plate.

5. Arrangement according to Claim 4, **characterized in that** the bow mounts (BA) are produced by deformation of a planar plate section.

6. Arrangement according to one of Claims 1 to 5, **characterized in that** bearing tabs (LL) are bent over downwards from the top limb (DS).

7. Arrangement according to one of Claims 1 to 6, **characterized in that** the distance of the pivot bearing (LO) from the lower top limb plane (EU) is small in relation to the diameter of the bearings.

8. Arrangement according to one of Claims 1 to 7, **characterized in that** the bow (B21; B12) is mounted in two laterally spaced-apart sub-bearings of the running carriage (LW1, LW2), and the sub-bearings enclose part of the longitudinal member (LT) between them.

9. Arrangement according to one of Claims 1 to 8, **characterized in that**, during the operation of the tarpaulin arrangement, the bows (B21, B12) are mounted in the pivot bearings (LO) of the running carriages (LW1, LW2) in a manner such that they can pivot over a limited pivoting range between an upright position and a stretched-out position, and are connected to each other in a manner facing away from the running carriages (LW1, LW2) in a bow joint (BG), and **in that**, in an installation pivoting position lying outside the abovementioned pivoting range, the bows (B21, B12) can be inserted into or removed from the pivot bearings (LO) and, in pivoting positions within the abovementioned, limited pivoting range, are secured against disengagement from the pivot bearings (LO).

10. Arrangement according to Claim 9, **characterized in that**, in the installation pivoting position, the bows (B21, B12) can be inserted into or removed from the pivot bearings (LO) by displacement of the bearing-side bow ends (BZ) parallel to the pivot axis (SA), and **in that** there are stop means (SI) on the running carriages (LW1; LW2), which stop means limit a displacement of the bow ends (BZ) parallel to the pivot axis (SA) within the pivoting range to an extent such that disengagement of the bows from the pivot bearings (LO) is prevented.

11. Arrangement according to Claim 10, **characterized in that** the stop means (SI) act on a section of the bow (B21; B12) between pivot bearing (LO) and bow joint (BG), which section is in the vicinity of the bearing.

12. Arrangement according to one of Claims 9 to 11, **characterized in that**, for the installation, the bearing-side width of the bows (B21, B12) can be varied counter to a restoring force.

13. Arrangement according to Claim 12, **characterized in that** the change in the bearing-side bow width is possible by means of elastic deformation of the bows (B21, B12).

14. Arrangement according to one of Claims 9 to 13, **characterized in that** the bows (B21, B12) are secured against disengagement from the pivot bearing (LO) by means of parts (SI) of the support plate.

15. Arrangement according to one of the preceding claims, **characterized in that** the bows (B21, B12) are each formed from a piece of wire, and the two bow ends (BZ) are bent over in alignment with each other as journals.

16. Arrangement according to one of Claims 1 to 15, **characterized in that** the distance between the pivot bearings of two bows (B21, B12) mounted on a running carriage (LW1; LW2) is small in the longitudinal direction (LR) in relation to the extent of the support plate of the running carriage (LW1; LW2) in the longitudinal direction (LR).

## Revendications

1. Agencement de toit pliant, notamment pour des bâches de carrosseries de véhicules, comprenant des chariots (LW1, LW2) pouvant coulisser dans des glissières longitudinales espacées latéralement, et comprenant à chaque fois une paire d'arceaux (B21, B12) entre des chariots successifs, les arceaux étant montés dans des paliers pivotants (LO) des chariots (LW1, LW2), et les chariots comprenant une plaque porteuse avec une branche de recouvrement (DS) essentiellement plane, recouvrant horizontalement le support longitudinal (LT), **caractérisé en ce que** les paliers pivotants (LO) sont disposés de manière encaissée dans les branches de recouvrement (DS) contre le plan supérieur des branches de recouvrement (EO).

2. Agencement selon la revendication 1, **caractérisé en ce que** des logements d'arceaux (BA) encaissés contre le plan supérieur des branches de recouvrement (EO) sont prévus, dans lesquels reposent les arceaux (B21, B12) dans une position étirée.

3. Agencement selon la revendication 2, **caractérisé en ce que** les logements d'arceaux (BA) forment des butées de limitation pour la position étirée des arceaux (B21, B12).

4. Agencement selon la revendication 2 ou 3, **caractérisé en ce que** les logements d'arceaux (BA) sont réalisés d'une seule pièce avec la plaque porteuse.

5. Agencement selon la revendication 4, **caractérisé en ce que** les logements d'arceaux (BA) sont fabriqués par déformation d'une section de plaque plane.

6. Agencement selon l'une quelconque des revendications 1 à 5, **caractérisé en ce que** des pattes de palier (LL) sont recourbées vers le bas depuis la branche de recouvrement (DS).

7. Agencement selon l'une quelconque des revendications 1 à 6, **caractérisé en ce que** la distance du palier pivotant (LO) depuis le plan de la branche de recouvrement inférieur (EU) est petite par rapport au diamètre du palier.

8. Agencement selon l'une quelconque des revendications 1 à 7, **caractérisé en ce que** l'arceaux (B21, B12) est monté dans deux paliers partiels espacés latéralement du chariot (LW1, LW2) et les paliers partiels incluent entre eux une partie du support longitudinal (LT).

9. Agencement selon l'une quelconque des revendications 1 à 8, **caractérisé en ce que** pendant le fonctionnement de l'agencement de toit pliant, les arceaux (B21, B12) sont montés sur une région de pivotement limitée entre une position redressée et une position étendue de manière pivotée dans les paliers pivotants (LO) des chariots (LW1, LW2) et sont connectés les uns aux autres à l'opposé des chariots (LW1, LW2) dans une articulation d'arceau (BG), et **en ce que** les arceaux (B21, B12) peuvent être insérés dans une position pivotée de montage située en dehors de ladite région de pivotement dans les paliers pivotants (LO) ou en être ressortis, et sont fixés dans des positions pivotées à l'intérieur de ladite région de pivotement limitée pour les empêcher de ressortir des paliers pivotants (LO).

10. Agencement selon la revendication 9, **caractérisé en ce que** les arceaux (B21, B12) peuvent être insérés dans la position de montage par coulissement des extrémités des arceaux (BZ) du côté des paliers parallèlement à l'axe de pivotement (SA) dans les paliers pivotants (LO) ou peuvent en être ressortis, et **en ce que** des moyens de butée (SI) sont prévus sur le chariot (LW1, LW2), lesquels délimitent, à l'intérieur de la région de pivotement, un coulissement des extrémités des arceaux (BZ) parallèlement à l'axe de pivotement (SA) dans une mesure telle que les arceaux ne puissent pas ressortir des paliers pivotants (LO).

11. Agencement selon la revendication 10, **caractérisé en ce que** les moyens de butée (SI) agissent sur une portion proche des paliers de l'arceau (B21, B12) entre le palier pivotant (LO) et l'articulation des arceaux (BG).

12. Agencement selon l'une quelconque des revendications 9 à 11, **caractérisé en ce que** la largeur du côté des paliers des arceaux (B21, B12) peut être modifiée pour le montage à l'encontre d'une force de rappel.

13. Agencement selon la revendication 12, **caractérisé en ce que** la variation de la largeur des arceaux du côté des paliers est possible par déformation élastique des arceaux (B21, B12).

14. Agencement selon l'une quelconque des revendications 9 à 13, **caractérisé en ce que** les arceaux (B21, B12) sont fixés par des pièces (SI) de la plaque porteuse pour les empêcher de ressortir du palier pivotant (LO).

15. Agencement selon l'une quelconque des revendications précédentes, **caractérisé en ce que** les arceaux (B21, B12) sont à chaque fois formés d'une pièce en fil métallique et les deux extrémités des arceaux (BZ) sont recourbées en s'orientant en alignement sous forme de tourillons.

16. Agencement selon l'une quelconque des revendications 1 à 15, **caractérisé en ce que** la distance entre les paliers pivotants de deux arceaux (B21, B12) montés sur un chariot (LW1, LW2) dans la direction longitudinale (LR) est petite par rapport à l'étendue de la plaque porteuse du chariot (LW1, LW2) dans la direction longitudinale (LR).
